**Europäisches Patentamt**

**European Patent Office**

**Office européen des brevets**

(19)

(11) Publication number: **0 067 134**
A2

(12) # EUROPEAN PATENT APPLICATION

(21) Application number: **82830135.8**

(22) Date of filing: **19.05.82**

(51) Int. Cl.³: **H 02 G 3/28**

(30) Priority: **19.05.81 IT 2182481 U**

(43) Date of publication of application: **15.12.82**
Bulletin **82/50**

(84) Designated Contracting States: **BE DE GB NL**

(71) Applicant: **Migliorini, Gianluigi, Via Marconi, 60, Cinisello Balsamo (Milano) (IT)**

(72) Inventor: **Migliorini, Gianluigi, Via Marconi, 60, Cinisello Balsamo (Milano) (IT)**

(74) Representative: **Caregaro, Silvio et al, c/o Società Italiana Brevetti S.p.A. Via Carducci 8, I-20123 Milano (IT)**

(54) Structure for supporting electric cables and/or wires in electric interior floor systems.

(57) A structure for supporting electric cables and/or wires of an electric interior floor system in described. Said structure comprises a plurality of metallic tubular segments (1) inside which electric wires are placed. The segments (1) are supported by supporting feet (4) the part (7) of which holding the tubular segments (1) is embodied by a little block made of insulating material.

EP 0 067 134 A2

STRUCTURE FOR SUPPORTING ELECTRIC CABLES AND/OR WIRES

IN ELECTRIC INTERIOR FLOOR SYSTEMS


The present invention concerns a structure for supporting electric cables and/or wires in electric interior floor systems. More particularly the invention concerns a structure destined to the supporting and insulation of wires inside rooms where a lot of electric equipments is set up, as for instance a room for data processing centre, a bank or similar ones.

Is is known that in the electric systems placed in the said rooms, wires and cables are laid in bulk, causing great troubles to the users. Besides wires are often subject to interlace causing great difficulties in handling apparatus when these have to be moved.

The said arrangement of the wires causes besides insulating problems of themselves in particular when cleaning and/or washing of the rooms have to be made.

Now a structure for supporting electric cables and/ or wires to be used as above said, has been conceived, being the object of the present invention, which allows to obviate all the above mentioned drawbacks, allowing to obtain that all the connecting wires, that is all the wires shunted from the electric network, are no more laid on the floor, but on the said structure under the floor itself, coming out of it only the necessary sockets just in the place of their use and in case a little piece of wire for the connection of an apparatus. Further distinctive feature of the structure according to the invention, is that itself can embody, besides the supporting structure of the electric wires, also the supporting structure of the floor, which, as it is known, is embodied by a plurality of substantially quadrangular panels laying on the ground.

The features and advantages of the structure according to the invention, will be evident from the following detailed specification of one of its not limiting embodiment, made with reference to the annexed figures of which:

FIGURE 1 is a perspective view showing a portion of the supporting structure according to the invention;

FIGURE 2 is a perspective view showing a foot support ing the structure according to the invention; and

FIGURES 3 and 4 are respectively side and plan views of the foot supporting the structure in subject.

The specification of the structure will be made with reference to one of the panels which embody the floor, the other portions of the structure, being modular or not, having always the same features.

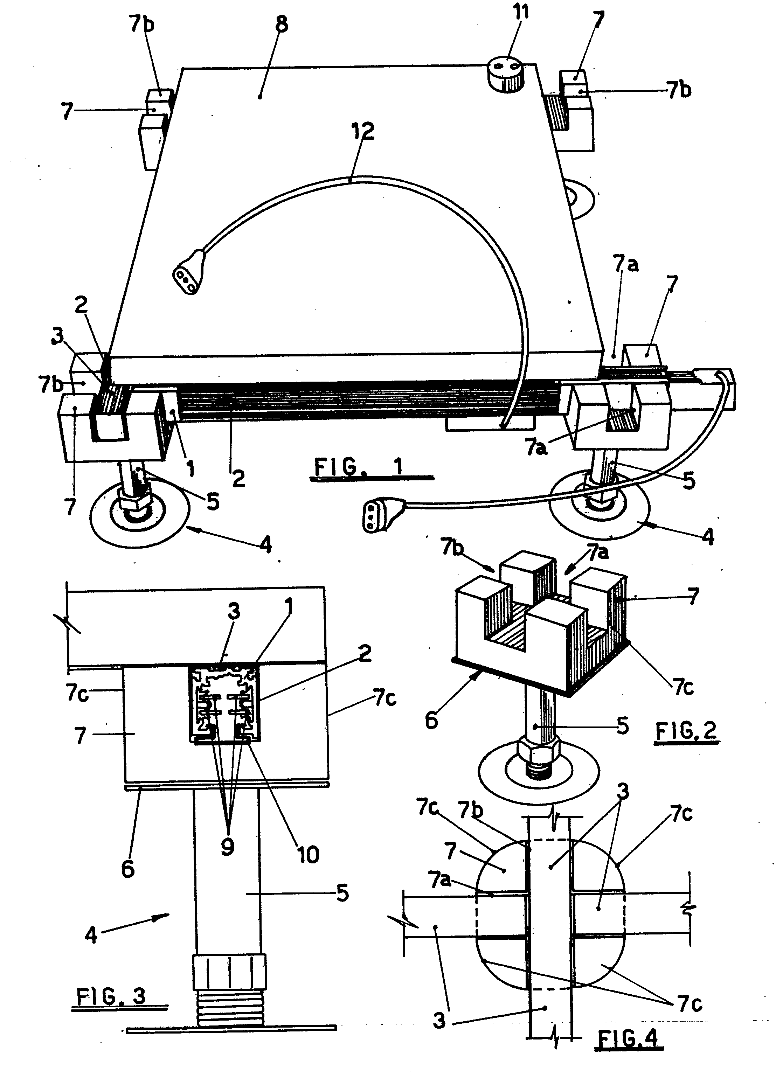

The structure according to the invention includes a plurality of metallic tubular segments whose length is determined by the length of the connection desired, two of the said segments being shown in the Fig. 1 and
marked by 1. Each segment 1 is covered outside by an
insulating layer 2, for instance by plastic material
or rubber and on the upper part of it a thin sheet
fitted up to retain the dust is applied as, for instance,
a strip 3 of felt or similar ones.

The segments 1 are supported by supporting feet including an adjustable-in-height base 5, for instance
a metallic one, on whose head 6 a substantially parallelepiped little block is applied made out of insulating
material, for instance rubber, plastic material or similar
ones, having two passages or radial millings 7a, 7b,
being perpendicular one to the other, fitted up to embody
suitable housings inside which the segments 1 are inserted. The external corners 7c of the little blocks 7
may be sharp ones, as shown in Fig. 2 or round ones
as shown in Fg. 4.

Upon the feet 4 the real floor of the room is made
up embodied, in the described embodiment, by a plurality
of panels 8, which are essentially quadrangular shaped,
put near one to another. In the case, the height of
the little blocks 7 is suitably dimensioned, also the
panels 8 will be able to lean on the supporting bears,
and these, in that way, will perform also the purpose
of supporting the floor as well.

In the embodiment shown in particular in the Fig.
3, the segments of the supporting structure are embodied
by a duct bar that is a metallic bar, inside which
insulated ribbon shaped electric wires 9 in couples
are fixed, each couple having an utilizable tension.
Or else the segments 1 may be embodied by a metallic
pipe, inside which the electric wires of connection run. In this last case the pipes supporting the electric system are closed, and in the first case on the open side of the U element a plastic shaped strip 10 is applied, in a complementary way with the said open side. This avoids problems of formation of dust, moisture and similar ones.

In both the cases, in the pre-established zones, the suitable shunts will be made, that is the element allowing the connection of the equipments to the electric system will be brought out over the panel 8, being a socket or a little segment of wire fitted with a socket at its end as schematically shown in Fig. 1 by 11 and 12. In that way it will be possible, for a pre-established layout of electric equipments inside a room, to arrange all the shunts for their connection in the zone of installation of the equipments themselves getting rid of the trouble some and often dangerous presence of free wires in bulk. Obviously the placing thus obtained may be simply changed without any particular complication.

It is clear that changes and/or modifications may be made to the structure according to the present invention, without, therefore, departing from the protective scope of the invention.

Sockets of known type can be fixed to one or more feet by inserting said sockets into the millings of the same. The electric wires will be connected to said sockets. A plurality of phone packs can also utilized, these jacks being snapping fixed into the millings of the feet.

## C L A I M S

1. Structure for supporting electric cables and/or wires of an electric interior floor system, characterized by the fact that it includes a plurality of metallic tubular segments (1) inside which electric wires are placed, being the said segments (1) supported by supporting feet (4) whose part (7) which holds the tubular segments (1) is embodied by a little block made by insulating material having at least one passage or transverse milling (7a, 7b) fitted up to embody a housing for the tubular segment.

2. Structure according to claim 1, characterized by the fact that each tubular segment has an external covering (2) made by insulating material.

3. Structure according to claim 1, characterized by the fact that each segment (1) has at least on one of its sides a little strip (3) fitted up to retain dust.

4. Structure according to claim 1, characterized by the fact that in the zones where a shunt is necessary for the connection of an apparatus, at least a socket (11, 12) is shunted from the tubular segment (1).

1/1

0067134

FIG. 1

FIG. 2

FIG. 3

FIG. 4